Europäisches Patentamt

European Patent Office

Office européen des brevets

(11) Numéro de publication: **0 281 489**
**A1**

(12) **DEMANDE DE BREVET EUROPEEN**

(21) Numéro de dépôt: **88420061.9**

(22) Date de dépôt: **23.02.88**

(51) Int. Cl.⁴: **B 60 R 9/08**

(30) Priorité: **27.02.87 FR 8702888**

(43) Date de publication de la demande:
**07.09.88 Bulletin 88/36**

(84) Etats contractants désignés:
**BE CH DE ES GB IT LI NL**

(71) Demandeur: **Lahu, Alix**
**2 Place Christin**
**F-39200 Saint Claude (FR)**

(72) Inventeur: **Lahu, Alix**
**2 Place Christin**
**F-39200 Saint Claude (FR)**

(54) **Dispositif de fixation pour planche à voile et objets similaires sur le toit d'un véhicule par l'intermédiaire de barres porte tout.**

(57) Dispositif permettant la fixation sur le toit d'un véhicule par l'intermédiaire de barres porteuses transversales, d'une planche à voile et de ses accessoires (wishbone et mât) ou éventuellement d'autres objets tels que planche de surf, canoë, kayak et autres objets rigides de forme allongée, caractérisé par l'utilisation d'éléments positionnés sur les barres porteuses (B) à des distances qui dépendent de l'objet à fixer. Chaque élément est caractérisé par un ensemble de pièces dont les principales sont : le corps (1), un bras levier pivotant (2) qui assure le maintien de la planche (P), un coulisseau (3) maintenant le wishbone (W), et un second bras levier (4) permettant le maintien du mât (M). D'autres éléments permettent soit: la fixation sur les barres porteuses, l'immobilisation du bras levier (2) et du coulisseau (3), le guidage en rotation et l'immobisation du levier (4).

FIG. 2

EP 0 281 489 A1

**Description**

La présente invention concerne un nouveau dispositif de fixation de planches à voile et de ses accessoires, sur le toit d'un véhicule par l'intermédiaire de barres "porte-tout" et pouvant éventuellement être placé contre un mur. Son utilisation peut être adaptée à d'autres matériels tels que: planches de surf, canoë, kayak ou autres objets rigides de forme allongée.

Les dispositifs proposés actuellement font le plus souvent appel à un système de fixation par sangles avec quelquefois des blocs supports élastiques. La fixation est alors simple mais elle a l'inconvénient bien souvent de ne pas comporter d'éléments assurant la mise en place des accessoires qui accompagnent les planches à voile (wishbone, mât). Ces éléments se retrouvent soit sous la planche, soit sir la planche où ils sont maintenus à l'aide de deux sangles faisant un ou deux tours morts après chaque élément - planche - wishbone - mât - d'où l'obligation d'utiliser des sangles de grande longueur. La fixation est malaisée et le temps passé à la mise en place ou au retrait est long. Le surplus de sangle est en outre difficile à ranger.

Un autre dispositif, à levier, se rabattant sur le planche est d'un maniement plus aisé, mais limite son utilisation à une forme assez précise, et par conséquent, les possibilités d'emploi.

Pour ces motifs, le damandeur a été amené à concevoir un nouveau procédé de fixation ferme, sûre et rapide d'une planche à voile sur des barres porteuses.Les dessins annexés illustrent l'invention.

PLANCHE 1/9:représente
Fig.1 Elément du dispositif avec ses composants en perspective.
PLANCHE 2/9 : représente
Fig.2 Elément du dispositif règlé en position fermée.
PLANCHE 3/9 : représente
Fig.3 Elément du dispositif en position ouverte.
PLANCHE 4/9: représente
Fig.4a Dispositif ouvert avec présentation de la planche,du wishbone et du mât, avant la mise en place.
Fig.4b Dispositif fermé; planche,wishbone et mât en place.
PLANCHE 5/9: représente les schémas de positionnement.
Fig.5 Planche et wishbone en place. Vue en bout.
Fig.6 Mise en place du wishbone. Vue en bout.
Fig.7 La planche en position. Vue de dessus.
Fig.8 Le wishbone en position. Vue de dessus.
PLANCHE 6/9 : représente
Fig. 9 Principe de montage et d'ablocage du bras de levier(2) sur le corps(1) formant une chape et système d'ablocage par vis et écrou.

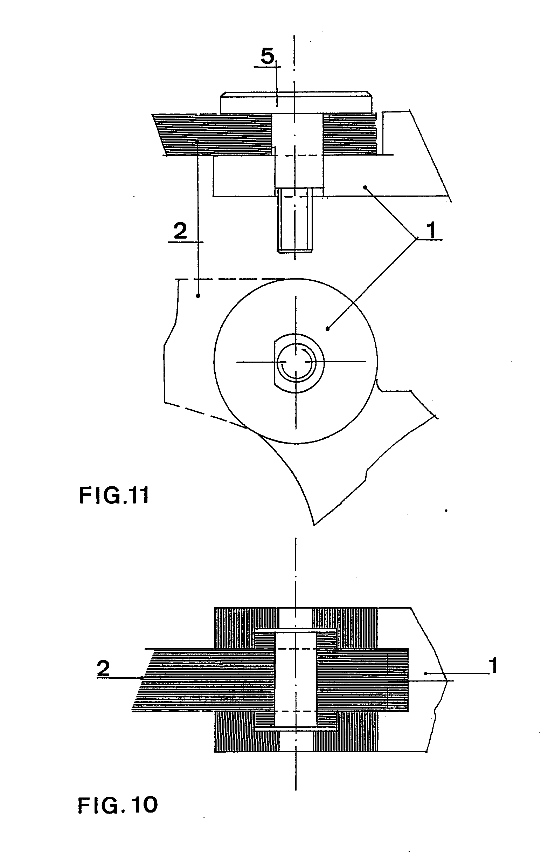

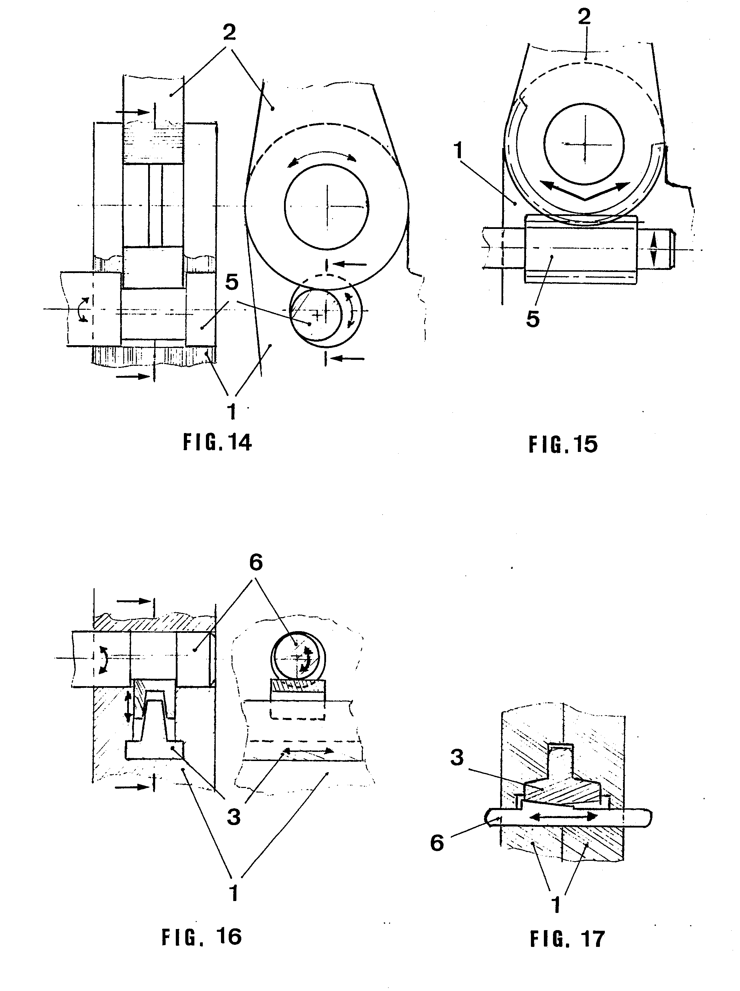

PLANCHE 7/9 : représente
Fig.10 Montage sur un axe "creux".

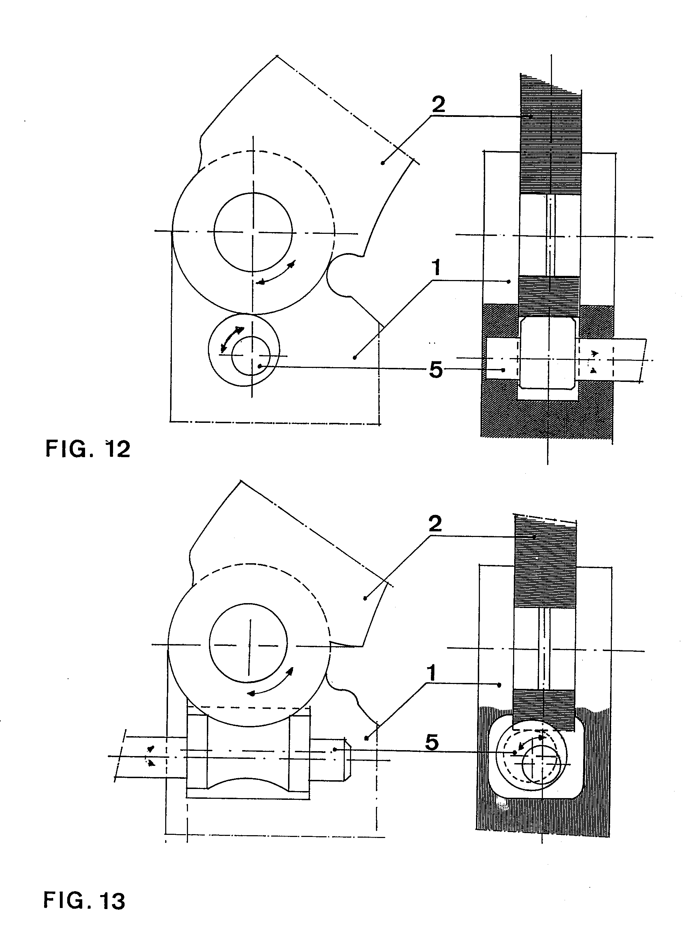

Fig.11 Montage et ablocage(5) sur un corps(1) à une seule branche du bras de levier(2).
PLANCHE 8/9 : représente
Fig.12 Ablocage par excentrique du bras de levier(2). Les deux axes (excentrique (5) et de levier (2)) sont parallèles.
Fig.13 L'ablocage du bras de levier se fait par un excentrique (5) dont l'axe de rotation est perpendiculaire à l'axe de rotation du bras de levier.
PLANCHE 9/9 : représente
Fig.14 Autre forme de l'excentrique d'ablocage
Fig.15 Rotation du bras de levier(2) et de son ablocage par un système secteur denté et vis sans fin.
Fig.16 Système d'immobilisation(6) du coulisseau par coincement conique direct
Fig. 17 Système d'immobilisation(6) du couliseau par excentrique et coincement conique indirect.

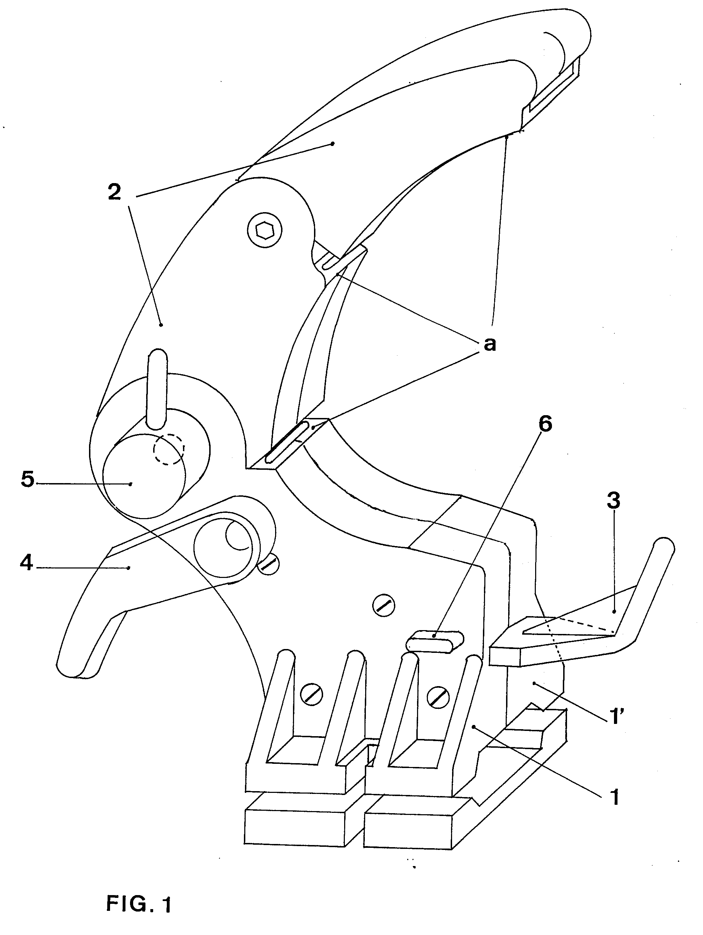

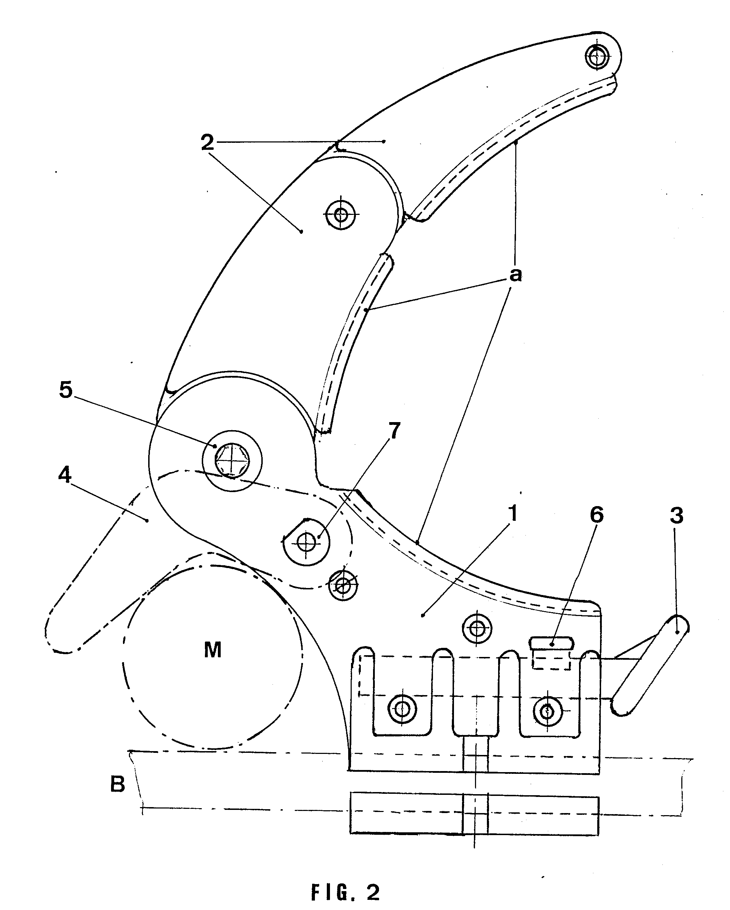

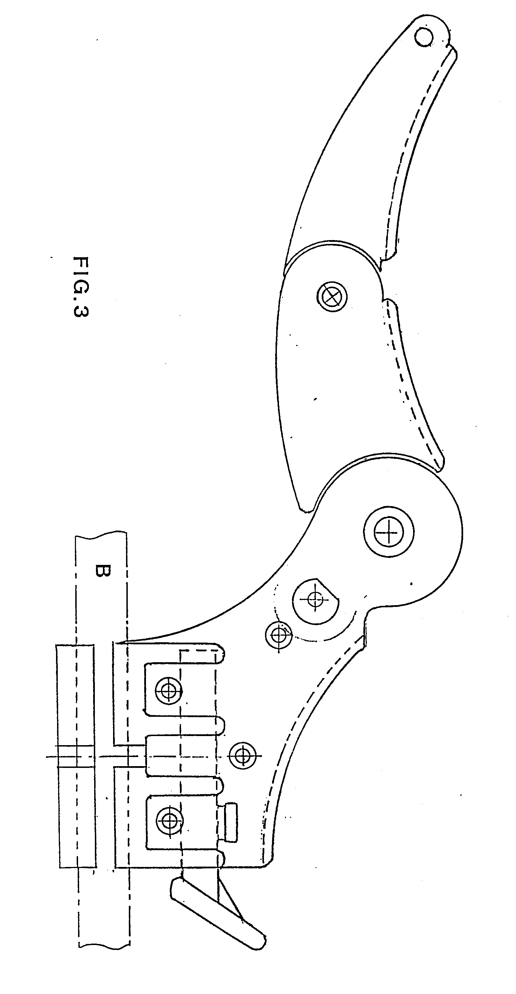

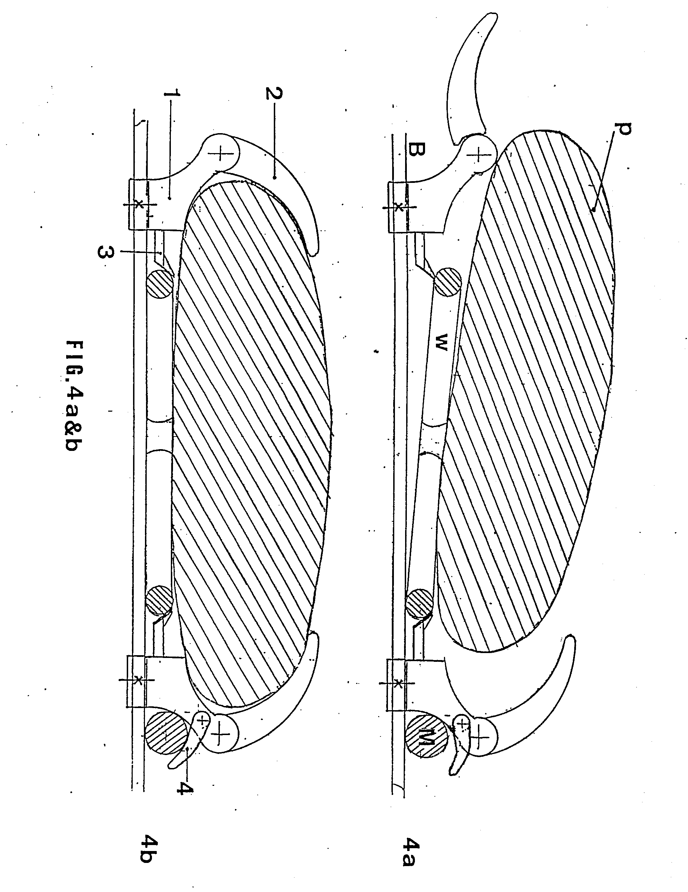

Le caractère propre de l'invention réside dans la fixation elle même qui est assurée par un enserrement partiel à l'aide de quatre bras leviers articulés (Fig.1.2.3.4.) ayant une forme proche de l'objet à fixer. Ces bras leviers (2) ont la particularité de pouvoir être constitués d'un ou plusieurs éléments articulés entre eux, ce qui permet une adaptation plus précise à la forme des objets à fixer. Chaque bras levier ainsi constitué est articulé sur un autre élément qui permet la fixation sur les barres porteuses. Cette articulation pouvant être immobilisée en rotation par un système d'ablocage approprié permet de procéder soit au réglage à la forme de l'objet à fixer (Fig 2 &4b.), soit à l'ouverture (Fig.3) ou à la fermeture (Fig.2) et assure le verrouillage de chaque bras levier. Les éléments (1) servant au montage sur les barres porteuses sont positionnés sur celles-ci à une distance convenable, choisie en fonction de la largeur de l'objet à fixer. Le système d'immobilisation sur les barres porteuses peut être à pression verticale ou latérale.

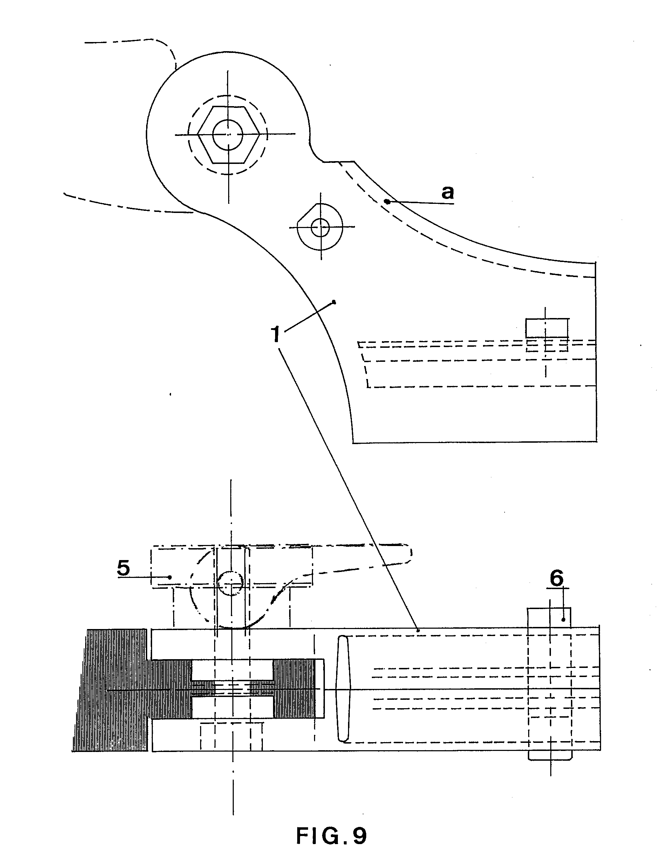

Le procédé de l'invention est particulièrement adapté à la fixation d'une planche à voile et de ses accessoires, wishbone et mât. Le wishbone est placé sous la planche; son maintien en postion est assuré par quatre petits coulisseaux {(3). Fig.1)} qui glissent chacun à l'intérieur de chaque élément (1) servant à la fixation sur les barres porteuses. Chaque coulisseau est donc réglable et peut être immobilisé dans la position désirée par un système d'ablocage ad hoc. Ces coulisseaux ont une forme adaptée à leur fonction dont le but est de s'opposer après réglage et immobilisation aux déplacements longitudinaux, transversaux et verticaux (Fig. 4b & 8).

La fixation du mât, placé sur la partie extérieure du dispositif de l'invention, se caractérise par son maintien qui se fait à l'aide de deux bras leviers (4) articulés, pouvant être immobilisés en rotation par un blocage approprié. Ces bras leviers équipent deux des éléments (1) de fixation sur les barres porteuses(B). Après la mise en place du mât (avec ou sans voile), une simple pression sur chaque bras levier vient enserrer le mât et assure son maintien en l'appuyant sur les barres porteuses, les éléments (1) fixés sur les barres et la bras levier (4), ce dernier étant immobilisé en rotation par le système d'ablocage prévu à cet effet ou par la pression d'un ressort. Ce bras levier (4) peut être fixé sur l'un des côtés de l'appareil (Fig.1 & 4) ou dans la partie centrale.

Le procédé de l'invention permet la fixation sur le toit d'un véhicule, d'une planche à voile et de ses accessoires (wishbone et mât) dans des conditions d'utilisation fonctionnelle, simple, facile et rapide. Il offre en outre la possibilité de fixer d'autres objets tels que planche de surf, canoë, kayak, etc...Il peut être aussi employé pour le rangement de ces objets contre un mur car l'invention permet son utilisation de la position horizontale à la position verticale; il suffit pour cela d'avoir un système de fixation des quatre éléments (Fig.1) adapté à la position désirée.

L'invention proposée se compose de quatre éléments (Fig.1) pouvant être identiques dans leur forme et leur fonctionnement. Ces éléments sont associés par paire, montés sur la même barre porteuse (Fig.4). Deux éléments de chaque paire fixés dans la partie centrale du véhicule sont réglés parallèle au sens du déplacement de celui-ci et orientés dans le même sens (Fig. 4-5-7).Les constituants de chaque élément sont réglés et immobilisés en position et à la forme de l'objet à fixer de façon permanente si le transport d'un même objet est fréquent. Les deux autres éléments sont fixés sur les barres porteuses sur le côté extérieur du véhicule et orientés de façon à ce que les bras leviers de chaque paire d'éléments puissent assurer leur fonction d'enserrage (Fig.4). La distance entre les éléments d'une même paire est fonction de l'objet à fixer. Le basculement par rotation des bras leviers assure l'ouverture ou la fermeture du procédé de l'invention (Fig. 3 &4).

Le système d'ablocage (5) permettant l'immobilisation en rotation des bras leviers (2) peut être constitué soit d'une poignée ou d'un levier assurant un ablocage ou un déblocage facile et rapide, soit par un serrage par clef qui dans certains cas peut assurer une certaine sécurité contre le vol. Un dispositif anti-vol peut être prévu mais il devra, afin d'être efficace, être monté sur les quatre éléments.

Selon une forme de réalisation préférentielle représentée par la figure n°1, l'élément principal ou corps (1)(Fig.1.2.4) permet la fixation sur les barres porteuses, l'appui de la planche à voile (zone a), le maintien des différents constituants de chaque élément du procédé de l'invention : bras leviers (2) de fixation de l'objet (P), coulisseau(3), levier de fixation du mât (4), les systèmes d'ablocage des leviers (5 et 7) et des coulisseaux (6).

Le corps est composé de deux parties symétriques (1-1') assemblées par vis et écrou. La partie supérieure constitue une chape avec axe fixe (Fig.9.10) qui assure le guidage en rotation et l'immobilisation du bras levier (2). La partie du corps (a) en contact avec l'objet à fixer devra être à déformation élastique.Les deux pièces constituant le corps pourront être moulées soit en utilisant une matière plastique ayant une bonne résistance à la charge de rupture et un bon module d'élasticité, soit en caoutchouc vulcanisé mi-dur, soit en alliage léger; mais dans ce cas, il faut prévoir un apport de caoutchouc ou de mousse diverse, ou autre produit pour assurer un contact non agressif avec l'objet à fixer.

La réalisation des bras leviers en un seul élément demande que la partie (a) en contact avec l'objet (P), ait une forme la plus approchante possible de celle de l'objet à fixer ainsi qu'une déformation élastique. Si les bras leviers sont en plusieurs éléments, il est préférable que les articulations soient de type chape avec axe fixe et immobilisation par vis et écrou. Les matériaux utilisés et la réalisation peuvent être identiques à ceux employés pour la fabrication du corps (1) avec les mêmes réserves concernant les alliages légers. Les autres constituants: coulisseaux (3), bras leviers (4) de fixation du mât, peuvent être réalisés dans les mêmes matériaux avec les mêmes réserves.

L'utilisation du procédé de l'invention pour la fixation d'une planche à voile et de ses accessoires (wishbone et mât), est simple et très rapide.

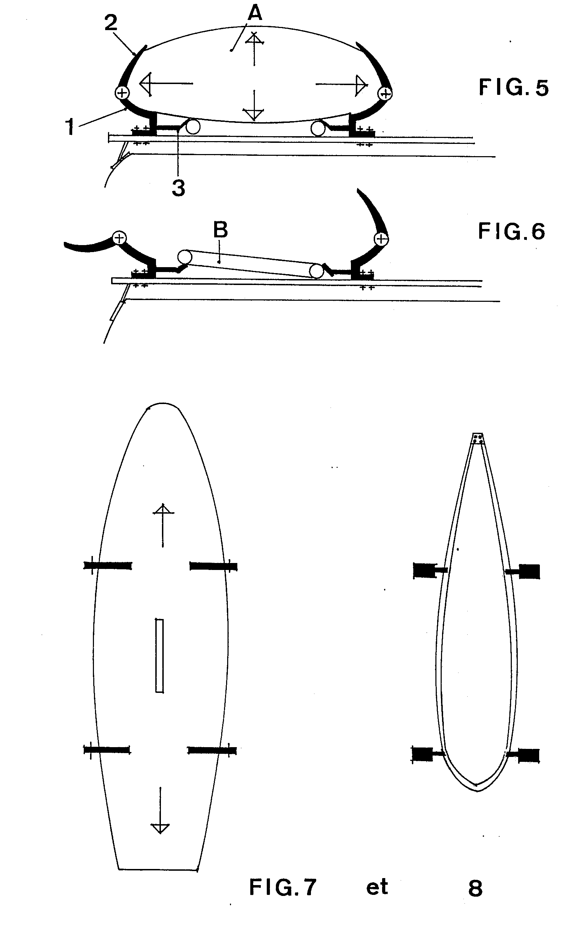

Les barres porteuses (B) sont fixées sur le toit du véhicule (Fig 7) à une distance permettant de limiter au mieux les porte à faux de la planche (environ 1/3 de la longueur). Les quatre éléments constituant le procédé de l'invention sont réglés (en forme et en position) (Fig.4) puis immobilisés sur les barres porteuses.

On procède à la mise en place du wishbone (w) par une simple pression sur ses montants, suivie d'une légère rotation. L'élasticité des tubes constituant le wishbone assure son maintien entre les quatre coulisseaux (Fig.4.6.8). Il faut procéder de même, mais avec une rotation en sens inverse, pour la dépose du wishbone. La mise en place de la planche se fait de la manière suivante: les deux bras leviers (2) situés sur la partie avant (bord extérieur du véhicule) étant ouverts (Fig. 3&4b), leur ouverture assurant une protection de la carroserie, la planche est hissée et positionnée sur le dispositif (Fig.7) et mise en appui sur les deux bras leviers (2) arrière (immobilisés en rotation); on rabat ensuite les deux bras leviers avant sur la planche en exerçant une pression pour assurer son maintien, puis on immobilise en rotation les bras leviers par le système d'ablocage (5)(Fig. 9.10.12.13.14.15.) prévu à cet effet. La planche est alors en place. Le mât est fixé sur les barres porteuses, côté extérieur des éléments de fixation, à l'aide des deux bras leviers (4) (Fig.1&4) conçus pour cette fonction; il suffit d'exercer, avant ablocage, une pression qui applique le mât sur les barres porteuses (B), les éléments de fixation (1) et les bras leviers (4).Le mât peut être placé soit sur le bord extérieur du véhicule, soit dans la partie centrale (solution préférable).

Le montage d'un deuxième dispositif permet la fixation de deux objets similaires ou différents si la largeur de ces appareils est compatible avec celle des barres porteuses.

**Revendications**

1) Dispositif permettant la fixation sur le toit d'un véhicule par l'intermédiaire de barres porteuses transversales, d'une planche à voile et de ses accessoires (wishbone et mât)ou éventuellement d'autres objets tels que planche de surf, canoë, kayak et autres objets rigides de forme allongée.

Dispositif caractérisé par l'utilisation d'éléments positionnés sur les barres porteuses à des distances qui dépendent de l'objet à fixer. Chaque élément est caractérisé par un ensemble de pièces (Fig 1/9 et 2/9) dont les principales sont (Fig 1): le corps (1), un bras levier pivotant (2) qui assure le maintien de la planche (P), un coulisseau (3) maintenant le wishbone (W) et un second bras levier (4) permettant le maintien du mât (M). D'autres éléments permettent soit: la fixation sur les barres porteuses, l'immobilisation du bras levier (2) et du coulisseau (3), le guidage en rotation et l'immobisation du levier (4).

Le corps (1) est caractérisé en ce qu'il se fixe directement sur les barres porteuses et peut être positionné par coulissement sur celles-ci. Son immobilisation peut être assurée par une pression verticale ou latérale suivant conception. Chaque élément du corps (1-1') est caractérisé par une partie déformable élastique (a) sur laquelle prend appui l'objet à fixer. La partie supérieure est caracterisée par une partie à une ou deux branches servant d'axe de rotation et d'immobilisation du levier (2), positionnée au dessus de la partie déformable (a) et déportée vers l'extérieur.

Le dispositif est caractérisé par le bras levier (2) pivotant et pouvant être immobilisé sur le corps (1) après réglage à la forme de l'objet à fixer, ou, pour l'ablocage de l'objet sur le dispositif (Fig 4).

2) Dispositif selon la revendication 1 caractérisé en ce que l'articulation du bras levier (2) se fait sur un axe fixe pouvant être en relief (Fig 9) ou en creux (Fig 10),ce qui supprime, où du moins limite les risques de desserrage. Ce bras levier (2) caractérisé en ce qu'il peut être constitué d'un seul ou de plusieurs éléments articulés entre eux, avec les mêmes caractéristiques que l'articulation principale. Ce bras levier, ou les éléments le constituant, est caractérisé en ce que les surfaces d'appui (a) en contact avec l'objet fixé sont constituées en une matière déformable et élastique.

3) Dispositif d'immobilisation en rotation du bras levier (2) suivant revendications 1 & 2 caractérisé par une pression latérale soit des flasques du corps (1) sur les parois du bras levier (2), soit l'inverse flasques du bras levier sur les parois du corps (1) si le bras levier (2) forme une chape à deux branches. Cette pression peut résulter d'un système de serrage vis/écrou ou écrou/vis (Fig 9) ou par l'utilisation d'un excentrique à levier.L'adhérence peut être augmentée par la création d'obstacles radiaux sur les surfaces en contact.

4) Dispositif d'immobilisation en rotation, suivant revendications 1, 2 & 3 caractérisé en ce qu'il peut-être aussi le résultat d'une pression radiale exercée par un dispositif à excentrique ou une came dont l'axe de rotation est soit parallèle à l'axe de rotation du bras levier (2) (Fig 12-14), soit perpendiculaire à ce bras (Fig 13).

5) Dispositif selon l'une quelconque des revendications précédentes caractérisé en ce que la rotation et l'immobilisation du bras levier (2) se fait par un système de commande composé d'un secteur denté concentrique à l'axe de rotation du bras levier(2) et d'une vis sans fin (5) ayant un caractère d'irréversibilité (Fig 15).

6) Dispositif d'immobilisation en position du coulisseau (3) servant au maintien du wishbone selon revendication 1 caractérisé par un dispositif de blocage par coincement conique agissant directement ou indirectement sur une ou plusieurs surfaces du coulisseau (Fig 16-17).

7) Dispositif d'immobilisation suivant revendications 1 & 6 caractérisé par le dispositif de blocage par vis et écrou agissant directement ou indirectement sur une ou plusieurs surfaces du coulisseau.

8) Dispositif d'immobilisation suivant revendications 1 & 6 caractérisé par un système de blocage par came ou excentrique agissant directement ou indirectement sur une ou plusieurs surfaces du coulisseau (3) (Fig 16).

9) Dispositif de fixation d'une planche à voile ou autres objets suivant revendications 1 & 2 caractérisé en ce que les surfaces des parties actives (a) (Fig 1-2) en contact avec les objets à maintenir sont constituées dans une matière pouvant subir une déformation élastique. Cette matière peut être la même que celle constituant les différents éléments du dispositif (corps, bras leviers, coulisseaux) ou bien une matière différente remplissant les conditions désirées et pouvant être rendue solidaire des différents éléments par collage, pincage, clips ou surmoulage.

10) Dispositif selon l'une quelconque des revendications précédentes caractérisé en ce que le maintien et le guidage en rotation du bras levier (2)se caractérise en ce qu'il peut être constitué d'un corps(1) formant chape ou d'un corps à une seule branche (Fig 11) et dont l'élément (5) servant d'axe de rotation et d'immobilisation du bras levier (2) est d'une conception dont la forme supprime le degré de liberté en rotation. Cette conception peut être une surface plane sur une partie cylindrique ou un polygone régulier ou quelconque. On retrouvera cette forme dans la partie du corps assurant son positionnement. Le bras levier (2) peut former suivant revendications 1, 2 & 3, une chape à une ou deux branches pour assurer la rotation des différents points d'articulations.

0281489

FIG. 1

0281489

FIG. 2

0281489

FIG.3

B

FIG.4a&b

0281489

FIG. 5

FIG.6

FIG.7 et 8

0281489

FIG.9

0281489

FIG.11

FIG.10

0281489

FIG. 12

FIG. 13

**FIG. 14**

**FIG. 15**

**FIG. 16**

**FIG. 17**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 574 875 (GIEBER)<br>* Figures 3-11; page 10, ligne 31 - page 15, ligne 26 *<br>--- | 1,9 | B 60 R 9/08 |
| A | AT-B- 378 155 (GIEBER)<br>* Figures; page 3, ligne 2 - page 4, ligne 3 *<br>----- | 1 | |

**DOMAINES TECHNIQUES RECHERCHES (Int. Cl.4)**

B 60 R

Le présent rapport a été établi pour toutes les revendications

| Lieu de la recherche | Date d'achèvement de la recherche | Examinateur |
|---|---|---|
| LA HAYE | 03-06-1988 | DUBOIS B.F.J. |